# EUROPEAN PATENT APPLICATION

(11) **EP 0 958 952 A1**
(43) Date of publication of application: **24.11.1999**
(21) Application number: 99302530.3
(22) Date of filing: 31.03.1999
(51) Int. Cl.: B60H 1/32, F04C 23/00

(54) **Truck refrigeration unit incorporating horizontal rotary compressor**

(30) Priority: 20.05.1998 US 81904
(71) Applicant: CARRIER CORPORATION, Syracuse New York 13221 (US)
(72) Inventor: Bushnell, Paul J., Syracuse, New York 13215 (US); Genois, Didier F., 76000 Rouen (FR); Lajeunesse, Gaetan H., Quebec J7V 8P3 (CA); Stumpf, Andre G., 76240 Bonsecours (FR)
(74) Representative: Gilding, Martin John

(57) **Abstract**

A transport refrigeration system (18) is provided for use with a straight truck or van (10). The truck has a longitudinal axis which extends along the direction of straight travel of the truck (10). The refrigeration system (18) includes separate evaporator (20) and condenser units (22) with the condenser unit (22) having a structural frame supporting predetermined components including a stand-by compressor (34). The stand-by compressor (34) is an electrically operated hermetic horizontal rotary compressor having an axis of rotation (78). The compressor (34) is mounted on the structural frame (98) of the condenser unit (22) with the axis of rotation (78) oriented horizontally and substantially perpendicular to the longitudinal axis (95) of the truck (10).

## Description

### Technical Field

The invention relates in general to refrigeration systems and, more specifically, to a transport refrigeration system suitable for controlling the temperature of a conditioned space of vehicles such as straight trucks and delivery vans.

### Background Art

Transport refrigeration systems for straight trucks and vans commonly utilize separate condenser and evaporator sections or units, with the condenser unit being mounted on the nose or front wall of a straight truck or on a roof of a van, and with an evaporator unit being mounted in a conditioned space of the associated vehicle. It is common practice for such refrigeration units to be provided with a normal operation or "road" compressor which is mounted in the engine compartment of the vehicle and driven mechanically as by a belt, by the engine of the vehicle. It is also common practice to provide such refrigeration unit with a "standby" compressor, which is located in the condenser unit. Standby compressors typically include a standby prime mover, e.g. an electric motor, which is adapted to drive the standby compressor through a mechanical interconnection such as a pulley - belt arrangement. The standby electric motor is adapted to be interconnected to an external electrical power supply to thereby drive the standby compressor when the truck is parked with its engine off.

Such standby compressor arrangements are expensive, heavy, and occupy a large volume of space within the condenser units. It is accordingly deemed desirable to have a standby compressor, which is light weight, efficient, and occupies a minimum of space within the condenser unit.

### Summary of the Invention

A transport refrigeration system is provided for use with a straight truck or van. The truck has a longitudinal axis which extends along the direction of straight travel of the truck. The refrigeration system includes separate evaporator and condenser units with the condenser unit having a structural frame supporting predetermined components including a stand-by compressor. The stand-by compressor is an electrically operated hermetic horizontal rotary compressor having an axis of rotation. The compressor is mounted on the structural frame of the condenser unit with the axis of rotation oriented horizontally and substantially perpendicular to the longitudinal axis of the truck.

### Brief Description of the Drawings

The invention may be better understood and its objects and advantages will become apparent to those skilled in the art by reference to the accompanying drawings, in which:
Figure 1 is an elevational view of a straight truck illustrating a condenser unit incorporating a compressor according to the present invention mounted on the front wall of the cargo box thereof;
Figure 2 is a simplified diagrammatic illustration of a truck, and a condensing unit incorporating a horizontal rotary compressor as oriented according to the present invention;
Figure 3 is a perspective view of the condensing unit of Figure 1 with the outer cover removed;
Figure 4 is a simplified schemetic diagrame of a transport refrigeration system having a condenser unit constructed according to the teachings of the present invention; and
Figure 5 is a vertical section of a horizontal rotary compressor of the type illustrated in Figure 3.

### Description of the Preferred Embodiment

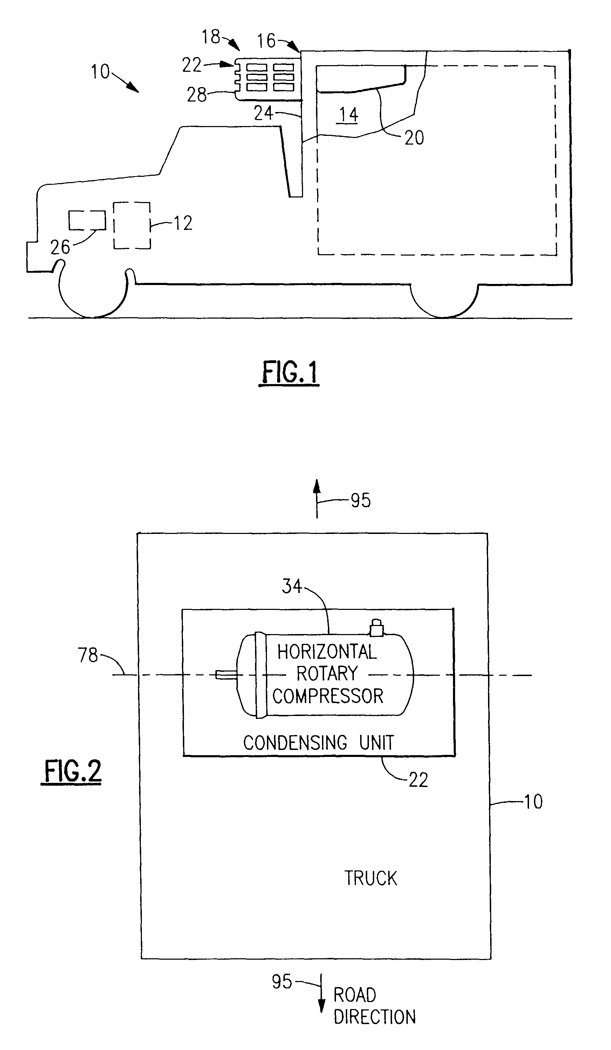

Referring now to the drawings, and to Figure 1 in particular, there is shown an elevational view of a straight truck 10 having an engine 12 and a conditioned cargo space 14, which is defined by a plurality of insulated wall members, including a forward wall member 16. The conditioned cargo space 14 is temperature controlled by way of a transport refrigeration system 18. The transport refrigeration system 18 includes an evaporator unit 20 disposed in the conditioned space 14, a condenser unit 22 mounted on the vertical front outside surface 24 of wall member 16, and a refrigerant compressor 26 driven by the truck engine 12. The condenser unit 22 is provided with a removable outer cover 28.

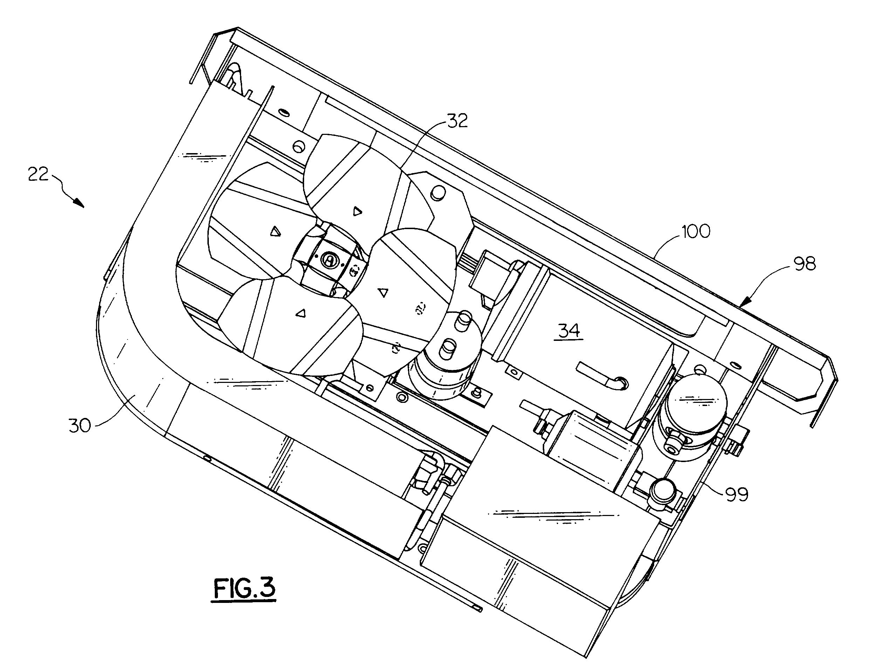

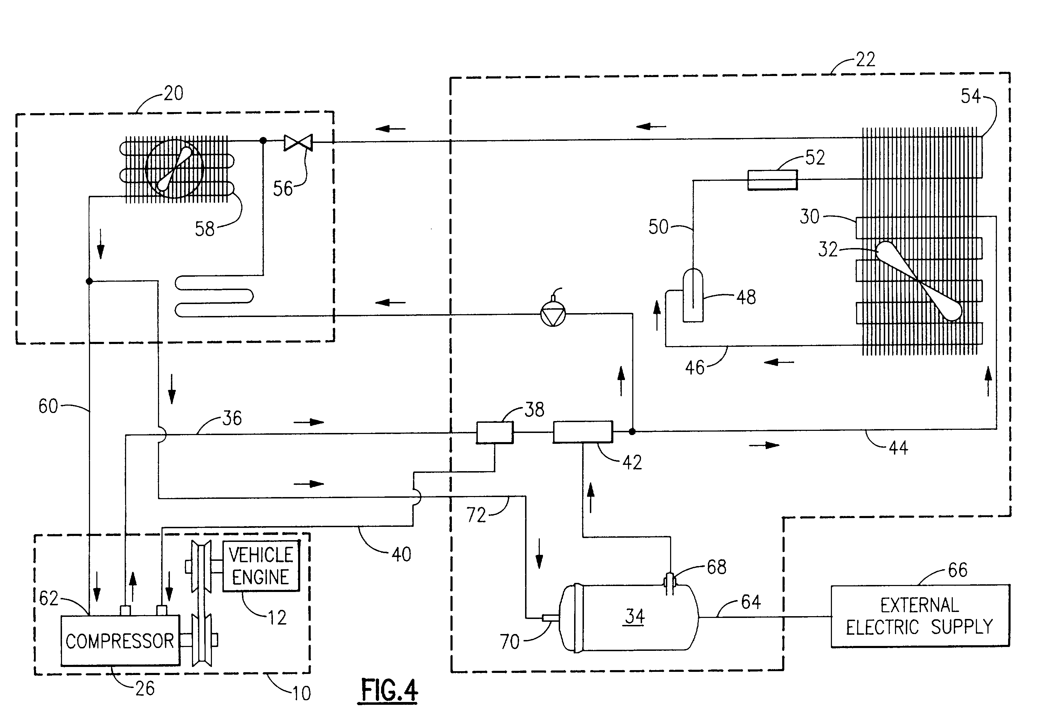

Figure 3 illustrates the condenser unit 22 with the outer cover 28 removed therefrom. The basic components of the condenser unit include the condenser coil 30, the condenser fan 32 and stand-by compressor 34. Other components of the condensing unit will be described briefly with reference to a simplified schematic diagram of the refrigeration system 18 as illustrated in Figure 4.

With reference to Figure 4, the refrigeration system, which is basically a vapor compression refrigeration system, comprises the previously referred to evaporator unit 20, condenser unit 22 and the road compressor vehicle engine combination 26 and 12, respectively. The condenser unit 22 incorporates a horizontal rotary compressor 34 in a manner as will be described hereinbelow in accordance with the present invention.

In the illustrated system, during normal road operation when the road compressor 26 is driven by the engine 12, refrigerant is compressed thereby raising its temperature and pressure and is forced, along with a quantity of lubricating oil intermixed therewith, through a discharge line 36. The discharge line 36 conducts the mixture to an oil separator 38 where the hot refrigerant gas and oil are separated from one another. Within the separator 38, the oil is collected and returned to the compressor via the oil return line 40.

The hot, substantially oil free gaseous refrigerant passes from the separator 38 through a compressor flow control valve 42 and refrigerant line 44 to the condenser 30 where it condenses and passes via liquid line 46 to the receiver 48. Liquid refrigerant from the receiver passes through refrigerant line 50 through a filter dryer 52, through an economizer heat exchanger 54 to the thermostatic expansion valve 56. Liquid refrigerant passing through the thermostatic expansion valve 56 is partially flashed and dropped in pressure before reaching the evaporator coil 58 where the remaining liquid refrigerant evaporates and a gaseous refrigerant is returned via refrigerant line 60 to the suction port 62 of the road compressor 26.

When the truck 10 is stopped and the vehicle engine 12 is not running, the road compressor 26 is not driven and accordingly the refrigeration system does not operate. During such conditions when it is desired to run the refrigeration system, the stand-by compressor 34 is coupled through an appropriate electrical connector 64 to an external electric supply 66 to thereby actuate the electrically run stand-by compressor 34. During such operation, the compressor control valve 42 and other appropriate valves in the system, as is conventional, result in compressed refrigerant from the stand-by compressor discharge 68 to be directed into the refrigeration system and follow the path as described hereinabove, with gaseous refrigerant returning to the suction port 70 of the stand-by compressor 34 through return line 72.

As illustrated in Figures 2, 3,4 and 5, the stand-by compressor 34 is a horizontal rotary compressor which incorporates both the compression mechanism and the electric motor which actuates it within a single outer shell 74. A horizontal rotary compressor of the type which is contemplated for use in such an application is illustrated and described in United States Patent Number 5,221,191, "Horizontal Rotary Compressor", assigned to the Assignee of the present application.

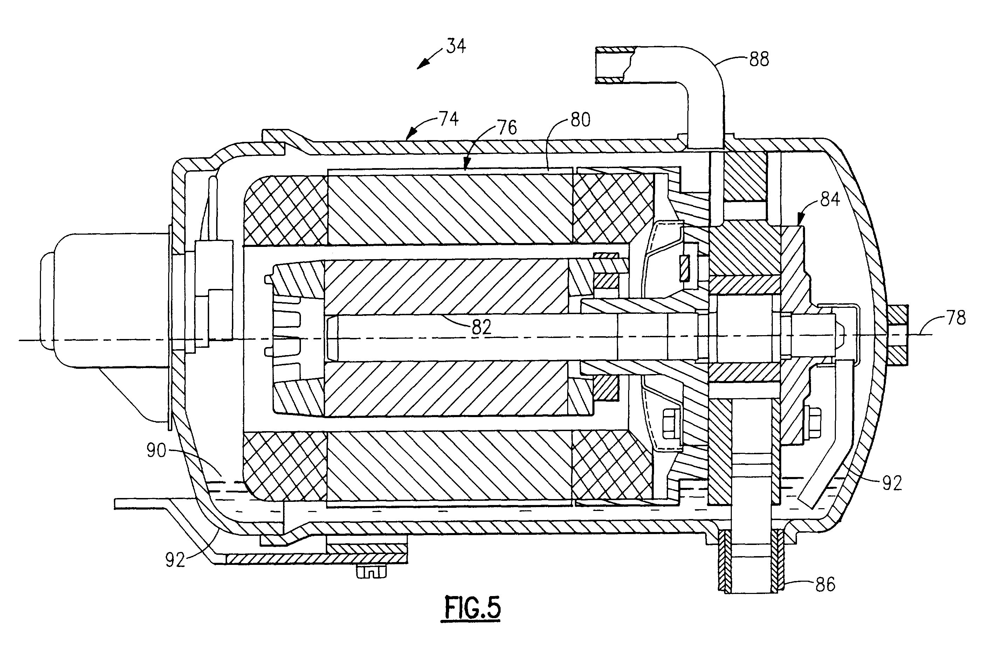

Figure 5 is a vertical sectional view of a hermetic horizontal rotary compressor 34, which includes an outer shell 74, and an electric motor 76 having a horizontal axis of rotation 78. The motor 76 includes an outer stator 80 and an inner rotor 82, which is coupled to a compression mechanism 84, which when actuated by the rotor draws gaseous refrigerant through a suction port 86 where it is compressed in the compression mechanism 84 and discharged at an elevated pressure through discharge port 88.

The compressor also includes a lubrication system wherein lubricating oil 90 is drawn from a refrigerant oil sump 92 at the lower end of the compressor shell 74 through an oil pick up tube 92 where it is appropriately distributed to the desired locations through the internal workings of the compressor.

According to the present invention, the horizontal rotary compressor 34, when used as a stand-by compressor in a transport refrigeration system, is oriented such that the axis of rotation of the compressor is horizontal and is also substantially perpendicular to the longitudinal axis of the truck.

With reference to Figure 2, the term "longitudinal axis of the truck" is intended to mean an axis 95 extending from front to rear of the truck in the direction in which the truck travels when it is traveling in a straight rearward or forward direction.

Figure 3 illustrates one embodiment of a condenser unit 22, wherein all of the internal refrigerant and electrical connection lines have been deleted in order to illustrate a horizontal rotary compressor 34 bolted to a structural frame 98 of the condenser unit in a an orientation to the invention. The structural frame comprises a horizontal base member 99, which supports most of the components of the transport refrigeration system 18 and a vertically extending rear element 100 integrally attached to the horizontal base member 98, which facilitates attachment of the unit to the front wall 16 of the truck 10, as illustrated in Figure 1.

With the horizontal rotary compressor 34 oriented as described above, the level of the oil 90 in the oil sump 92 will remain at substantially a uniform depth with the truck 10 oriented in a downwardly or upwardly oriented position as would result with the truck parked on an inclined roadway. Such orientation of a refrigerated truck, during stand-by operation, is not uncommon and, accordingly, orientation of the horizontal rotary compressor according to the present invention will assure submersion of the oil pick-up tube 94 in the oil 90 contained in the oil sump 92 regardless of the frontward or rearward incline of the vehicle when it is parked during stand-by operation. As a result, the compressor can be expected to operate reliably with full lubrication during such conditions.

## Claims

1. A transport refrigeration unit suitable for a straight truck, the truck having a longitudinal axis which extends along the direction of straight travel of the truck comprising:
a structural frame for supporting predetermined components including a compressor;
said compressor being an electrically operated hermetic horizontal rotary compressor having an axis of rotation; and
said horizontal rotary compressor being mounted on said structural frame with said axis of rotation oriented horizontally and substantially perpendicular to said longitudinal axis of the truck.

2. A transport refrigeration system for use with a straight truck, the truck having a longitudinal axis which extends along the direction of straight travel of the truck, the refrigeration system having separate evaporator and condenser units, with the condenser unit having a structural frame supporting predetermined components, including a compressor, the improvement comprising:
said compressor being an electrically operated, hermetic horizontal rotary compressor having an axis of rotation;
said horizontal rotary compressor being mounted on said structural frame with said axis of rotation oriented horizontally and substantially perpendicular to said longitudinal axis of the truck.

3. The combination of a truck which includes an engine and a cargo space, and a refrigeration system for cooling the cargo space, said refrigeration system comprising:
an evaporator unit disposed in said cargo space;
a condenser unit mounted on the truck outside of the cargo space;
a primary refrigerant compressor operably coupled to the truck engine;
said condenser unit further including an electrically operated hermetic horizontal rotary compressor; and
a refrigerant circuit interconnecting said evaporator unit, said condenser unit, said primary compressor, and said horizontal rotary compressor, said refrigerant circuit further including means for selectively allowing said primary compressor or said horizontal rotary compressor to operate said refrigeration system.

4. The apparatus of claim 3 wherein said truck has a longitudinal axis which extends along the direction of straight travel of the truck, and wherein said horizontal rotary compressor has an axis of rotation and wherein said horizontal rotary compressor is mounted in said condenser unit with said axis of rotation of said compressor oriented horizontally and substantially perpendicular to said longitudinal axis of the said truck.
